# FASCICULE DE BREVET EUROPEEN

(11) **EP 1 532 410 B1**
(45) Date de publication et mention de la délivrance du brevet: **30.03.2011**
(21) Numéro de dépôt: 03758277.2
(22) Date de dépôt: 26.08.2003
(51) Int. Cl.: F26B 3/28, F26B 9/10, F26B 23/06

(54) **INSTALLATION DE SECHAGE DE DECHETS, NOTAMMENT DE BOUES D'EPURATION D'EAUX**
VORRICHTUNG ZUM TROCKNEN VON ABFÄLLEN, INSBESONDERE VON ABWASSERSCHLAMM
INSTALLATION FOR DRYING WASTE, IN PARTICULAR WASTEWATER PURIFYING SLUDGE

(30) Priorité: 28.08.2002 FR 0210692
(43) Date de publication de la demande: 25.05.2005
(73) Titulaire: DEGREMONT, 92508 Rueil-Malmaison Cédex (FR)
(72) Inventeur: DELONS, Luc, F-92500 Rueil Malmaison (FR)
(74) Mandataire: Michardière, Bernard
(86) Numéro de dépôt international: PCT/FR2003/002583
(87) Numéro de publication internationale: WO 2004/020921

(56) Documents cités:
- DE-A- 4 315 321
- DE-A- 4 331 820
- US-A- 4 230 531
- US-A- 5 001 846

## Description

La présente invention concerne le séchage de déchets, notamment de boues provenant de traitements d'épuration d'eaux et elle se propose d'apporter un dispositif de séchage mettant en oeuvre deux sources d'énergie renouvelable : énergie solaire et énergie éolienne.

Cette invention s'applique particulièrement, sans pour autant y être limitée, au séchage des boues biologiques provenant des stations d'épuration d'eaux résiduaires, urbaines et/ou industrielles.

La présente invention prend toute son importance à une époque où, sur le plan mondial se développent la recherche et la mise en oeuvre, de techniques qui permettent de préserver les ressources d'énergie fossile et de contrôler le réchauffement de la planète dû à l'effet de serre.

L'homme de l'art sait que les boues d'épuration constituent des déchets inévitables résultant du traitement des eaux : chaque individu en produit en moyenne environ 20 kilos par an, ce qui représente pour l'Europe plus de 10 millions de tonnes par an, exprimées en Matières Sèches, ce qui représente un chiffre 5 fois supérieur lorsque l'on fait référence aux boues dites humides qui sont composées de 20% de Matières Sèches et de 80% d'eau.

A l'heure actuelle plusieurs destinations sont possibles pour ces boues, notamment : la mise en décharge, l'incinération et l'épandage agricole. Cependant, compte tenu de nombreuses contraintes (en particulier techniques, sanitaires, réglementaires...) de telles filières d'évacuations des boues sont de plus en plus complexes, donc de plus en plus chères et elles peuvent même être localement remises en cause voir même interdites.

Quoi qu'il en soit le séchage des boues constitue une étape incontournable dans la filière du traitement des eaux résiduaires car il permet de réduire selon un facteur 4 les volumes à stocker, à transporter et à éliminer. On conçoit que ce séchage constitue à l'heure actuelle un marché en pleine croissance.

L'état actuel de la technique dans ce domaine peut être résumé de la façon suivante :
- Le séchage thermique : cette technique utilise l'énergie traditionnelle (gaz, pétrole, électricité...) ainsi que des équipements spécifiques assurant le transfert de l'énergie à la boue et l'évaporation de l'eau contenue dans cette dernière. La mise en oeuvre de cette technique nécessite des installations importantes entraînant des investissements lourds et consommant des quantités colossales d'énergies (1 mégawatt par tonne d'eau évaporée) qui en outre génèrent des condensats très pollués qu'il faut ensuite retraiter à grands frais.
- Le compostage : un tel procédé naturel, très ancien mettant en oeuvre la fermentation thermophile de la matière organique carbonée en présence d'air entraîne un dégagement de chaleur permettant une déshydratation partielle de l'eau contenue dans les boues. Il s'agit d'un procédé simple, facile à mettre en oeuvre, économique et permettant d'obtenir un produit de qualité. Toutefois, il s'avère peu efficace pour la réduction du volume des boues, car le séchage n'est que partiel et nécessite l'addition de co-produits structurants (écorces, sciures, déchets verts, etc...)
- Le séchage solaire : cette technique commence à être développée dans le domaine du séchage des boues car elle permet de réaliser des installations simples, économiques et écologiques. Elle présente cependant l'inconvénient majeur de nécessiter de grandes surfaces de serres se traduisant par des investissements très importants, donc coûteux, et des difficultés d'implantations, celles-ci étant limitées aux zones rurales et aux stations de petites capacités. Le document DE 4315 321 A1 décrit une installation utilisant cette technique.

A l'heure actuelle il n'a pas été possible de réaliser, sur le plan industriel des installations de séchage mettant en oeuvre l'énergie éolienne. En effet, la production d'énergie par aérogénérateur en vue d'alimenter une installation classique de séchage des boues n'est pas compétitive. En outre, les solutions hybrides (compression de gaz, pompes à chaleur...) sont limitées en puissance et ne peuvent s'adresser qu'à de toutes petites installations. On connaît, en outre, l'inconvénient de l'énergie éolienne résultant du fait que cette dernière n'est pas constamment disponible, ce qui nécessite des équipements de séchage surdimensionnés (d'au moins un facteur 2), ce qui conduirait à des solutions non compétitives.

Partant de cet état de la technique, la présente invention se propose d'apporter une solution qui remédie aux inconvénients mentionnés ci-dessus tout en permettant de réaliser des installations de séchage des boues compétitives, de surfaces limitées, ne consommant aucune autre énergie que des énergies renouvelables et permettant une réduction efficace des volumes de boues.

Ce problème technique est résolu par un dispositif de séchage de produits pâteux ou pulvérulents tels que des déchets et plus particulièrement des boues provenant des stations d'épuration d'eaux, dans une enceinte recevant les produits à sécher et qui est munie de moyens assurant le retournement et le cheminement desdits produits, ce dispositif comportant une serre translucide ou transparente, édifiée sur une dalle sur laquelle est disposé le lit de produits à sécher, cette dalle étant munie desdits moyens de retournement et de cheminement, ce dispositif étant caractérisé en ce qu'il comporte une ou plusieurs éoliennes générant de l'énergie qui est dégradée sous forme de chaleur qui est restituée dans la dalle sur laquelle est épandu le lit de produits à sécher.

Ainsi qu'on le comprend, le dispositif selon l'invention assure un séchage en surface et en partie basse du produit à sécher en mettant respectivement en oeuvre deux techniques de séchage :
- le séchage solaire qui est obtenu par échauffement de la surface du lit de produits à sécher, par le rayonnement solaire qui traverse les parois transparentes ou translucides de la serre ;
- le séchage éolien : les éoliennes génèrent de l'énergie permettant de réchauffer, en partie basse, les produits à sécher. Cet effet peut être obtenu :
   - soit de façon simple par un aérogénérateur produisant de l'électricité qui alimente des résistances noyées dans la dalle supportant la serre ;
   - soit de façon plus complexe en utilisant une pompe à chaleur qui est actionnée par les éoliennes, la source chaude réchauffant la dalle et la source froide permettant d'abaisser le taux d'humidité de l'air de balayage.

D'autres caractéristiques et avantages de la présente invention ressortiront de la description faite ci-après en référence aux dessins annexés sur lesquels :
- la figure 1 est une vue schématique en perspective illustrant un exemple de réalisation d'une installation selon l'invention et,
- la figure 2 est une vue en élévation représentant une variante de cette installation.

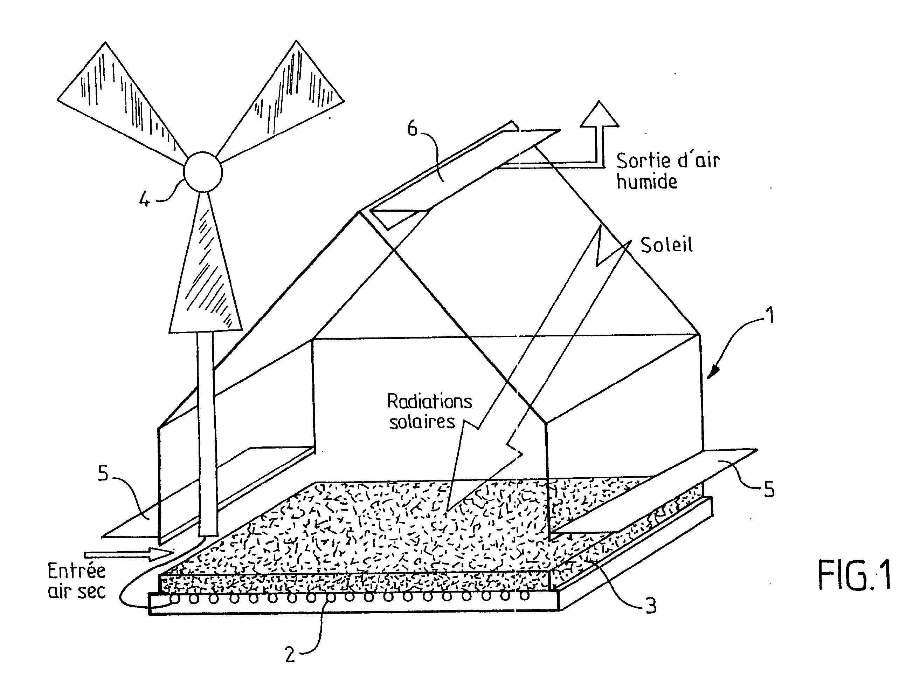

On se réfère en premier lieu à la figure 1. Sur cette dernière, on voit que, dans cet exemple de réalisation non limitatif l'installation de séchage objet de l'invention comporte :
- d'une part une serre 1 ayant des parois réalisées en matière plastique translucide ou transparente, permettant le passage des radiations solaires et qui repose sur une dalle ou plancher chauffant 2 sur lequel est épandu le lit 3 de produits à sécher, par exemple des boues biologiques provenant de stations d'épuration d'eaux. Les produits à sécher sont disposés en couche peu épaisse c'est-à-dire sur une épaisseur de l'ordre de 20 à 100 cm. Ainsi qu'on le mentionnera ci-après, ce plancher 2 comporte en outre des moyens assurant le retournement ainsi que le cheminement des produits à sécher et,
- d'autre part au moins une éolienne 4 générant de l'énergie restituée sous forme de chaleur pour assurer le chauffage de la dalle 2.

Dans l'exemple de réalisation illustré par la figure 1, les éoliennes telles que 4 produisent de l'électricité qui alimentent une batterie de résistances électriques noyées dans la dalle 2 et capables de dissiper dans cette dalle la puissance maximale fournie par les éoliennes.

L'installation comporte en outre des moyens de ventilation couplant une ventilation naturelle et une ventilation forcée intermittente. Elle comporte également des moyens de régulation comprenant des capteurs mesurant la température des boues 3 à sécher, la température de l'air respectivement à l'intérieur et à l'extérieur de la serre 1 ainsi que l'hygrométrie de cet air, ces divers capteurs (non représentés sur les dessins car il s'agit de moyens classiques bien connus de l'homme de l'art) actionnant des volets mobiles 5 et 6 qui sont prévus sur les parois de la serre, respectivement en partie basse et haute de cette dernière, permettant de réguler la convection naturelle qui assure l'évacuation de l'air chargé d'humidité, soit naturellement soit par ventilation assistée. Ce système peut être complété par des moyens de programmation et d'automatisation, ce qui permet par exemple, d'assurer une programmation pour une semaine de fonctionnement.

En ce qui concerne les moyens qui sont prévus dans la dalle ou plancher chauffant 2, pour assurer le retournement et le cheminement du produit à sécher, ils peuvent être réalisés par exemple, sous la forme de rouleaux tournants, munis de herses dentelées servant à scarifier le lit de boues à sécher 3, assurant le transport de ces dernières de l'entrée vers la sortie de la serre, tout en les retournant et en les aérant.

Les équipements de l'installation selon l'invention décrite ci-dessus, qui assurent d'une part le retournement et le cheminement du produit à sécher et, d'autre part la ventilation forcée, peuvent être alimentés par de l'énergie éolienne dont ils n'utiliseraient que 10% environ de la capacité normalement prévue sur l'installation. En cas de « déficit de vent », on utiliserait l'énergie du réseau général électrique en cas d'implantation péri-urbaine, ou bien encore on pourrait recourir à des panneaux photovoltaïques, en milieu rural isolé.

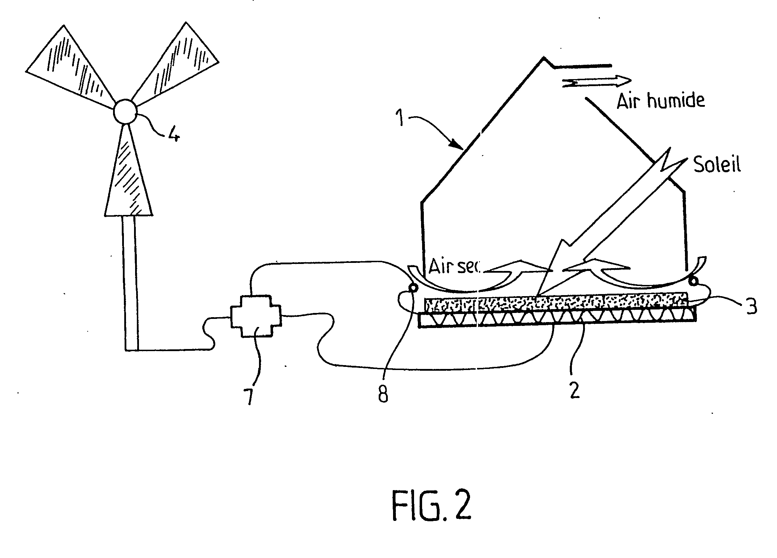

On se réfère maintenant à la figure 2 qui illustre une variante de l'installation objet de l'invention. Cette variante comporte les mêmes moyens que ceux décrits ci-dessus en référence à la figure 1, la seule différence étant due au fait qu'elle met en oeuvre une pompe à chaleur.

Cet exemple de réalisation permet de rendre plus efficace l'installation objet de l'invention, notamment dans des zones venteuses et humides comme par exemple dans les climats maritimes océaniques.

Les éoliennes telles que 4 actionnent une pompe à chaleur (7) comprenant un compresseur et deux échangeurs : l'un (source chaude) transmet les calories dans la dalle 2 afin de chauffer en partie basse, le lit 3 de matières à sécher, l'autre 8 (source froide) condense l'humidité de l'air entrant dans la serre 1 permettant ainsi un balayage de cette dernière à l'aide d'un air sec non saturé ce qui permet d'augmenter le rendement.

On a donné ci-après un exemple de mise en oeuvre d'une installation selon l'invention qui permet de faire ressortir les avantages et effets techniques qu'elle apporte par rapport aux installations de séchage traditionnelles.

Cette installation assure le traitement des effluents d'une ville de 20 000 habitants. La production de boues est de 400 tonnes par an de Matières Sèches (20 kilos par habitant), soit 2000 tonnes de boues présentant une siccité de 20% (contenant donc 80% d'eau). Cette siccité est celle que l'on obtient traditionnellement par déshydratation mécanique. L'installation de séchage selon l'invention comporte une serre ayant une surface de 700 m2 et une éolienne de puissance nominale de 100 kW alimentant une batterie de résistances électriques noyées dans la dalle 2. Cette installation permet d'obtenir des boues présentant une siccité supérieure ou égale à 75%.

Une installation de séchage traditionnelle permettant d'obtenir une siccité comparable à celle obtenue par l'installation objet de l'invention présenterait les caractéristiques suivantes, selon la technique mise en oeuvre :
- séchage thermique : en fonctionnement continu elle consommerait 200 kW.h de gaz naturel, fioul ou électricité pendant 8000 heures par an.
- compostage : elle nécessiterait 4000 tonnes de co-produits structurants (par exemple sciure de bois) ;
- séchage solaire : elle exigerait une serre présentant une surface de 1500 m2.

L'invention apporte en outre les avantages complémentaires ci-après :
- le coût de construction d'une installation selon l'invention est du même ordre de grandeur que celui des installations conventionnelles de séchage, qu'il s'agisse de séchage thermique ou de compostage ;
- par contre, le coût d'exploitation est divisé par un facteur 5, par suite de la non utilisation d'énergie fossile (séchage thermique direct ou indirect) ou de co-produit (compostage), les coûts de maintenance mécanique et les frais de main d'oeuvre étant, par ailleurs, nettement réduits dans le cas de l'invention ;
- enfin, l'emprise au sol d'une installation selon l'invention peut être deux fois moindre que celle d'une installation de séchage solaire, compte tenu de l'appoint d'énergie apporté par l'énergie éolienne.

Il demeure bien entendu que cette invention n'est pas limitée aux exemples de réalisation décrits et/ou mentionnés ci-dessus mais qu'elle en englobe toutes les variantes. En particulier, l'installation de séchage pourrait comporter plusieurs couloirs fonctionnant en série ou en parallèle ainsi que plusieurs éoliennes alimentant des réseaux de chauffage dans des zones déterminées. De même, ainsi qu'on l'a déjà mentionné ci-dessus, les installations selon l'invention peuvent être appliquées au séchage d'autres produits que des boues d'épuration : par exemple à des déchets humides, à des produits pâteux ou pulvérulents ou même pour évaporer des solvants autres que l'eau.

## Revendications

1. Installation de séchage de produits pâteux ou pulvérulents tels que notamment des déchets et plus particulièrement des boues provenant des stations d'épuration d'eaux, dans une enceinte recevant les produits à sécher et qui est munie de moyens assurant le retournement et le cheminement desdits produits, cette installation comportant une serre à parois translucides (1) ou transparentes, édifiée sur une dalle ou plancher (2) sur laquelle est disposé le lit (3) de produits à sécher, cette dalle étant munie desdits moyens de retournement et de cheminement, cette installation étant **caractérisé en ce qu'**elle comporte une ou plusieurs éoliennes (4) générant de l'énergie qui est dégradée sous forme de chaleur qui est restituée dans la dalle (2) sur laquelle est épandu le lit de produits à sécher (3).

2. Installation selon la revendication 1 **caractérisée en ce que** lesdites éoliennes (4) constituent des aérogénérateurs produisant de l'énergie électrique alimentant des résistances noyées dans la dalle (2).

3. Installation selon la revendication 1 **caractérisée en ce que** lesdites éoliennes actionnent une pompe à chaleur (7) comprenant un compresseur et deux échangeurs : l'un constituant la source chaude qui transmet les calories dans la dalle (2) et l'autre constituant la source froide, condensant l'humidité de l'air entrant dans la serre (1).

4. Installation selon l'une quelconque des revendications précédentes **caractérisé en ce qu'**elle comporte des moyens de ventilation couplant une ventilation naturelle et une ventilation forcée intermittente.

5. Installation selon l'une quelconque des revendications précédentes **caractérisée en ce qu'**elle comporte des moyens de régulation comprenant des capteurs mesurant la température du lit (3) de produits à sécher, la température de l'air respectivement à l'intérieur et à l'extérieur de la serre (1) et l'hygrométrie de l'air, ces capteurs actionnant des volets mobiles (5,6) prévus, respectivement en partie haute et en partie basse, sur les parois de la serre (1) afin de réguler la convection naturelle assurant l'évacuation de l'air chargé d'humidité.

6. Installation selon la revendication 5 **caractérisée en ce qu'**elle comporte en outre des moyens de programmation et d'automatisation.

7. Installation selon l'une quelconque des revendications précédentes **caractérisée en ce que** les moyens prévus dans la dalle (2) pour assurer le retournement et le cheminement du lit (3) de produits à sécher sont réalisés sous la forme de rouleaux tournants, munis de herses dentelées servant à scarifier le lit (3) tout en assurant le transport du lit de l'entrée vers la sortie de la serre.

8. Installation selon la revendication 4 **caractérisée en ce que** les moyens de ventilation forcée sont alimentés en énergie à partir desdites éoliennes (4).

9. Installation selon la revendication 7 **caractérisée en ce que** les moyens prévus dans la dalle (2) pour assurer le retournement et le cheminement du lit (3) de produits à sécher sont alimentés en énergie à partir desdites éoliennes (4).

## Claims

1. An installation for drying pasty or powdery products such as in particular waste and more particularly sludge from wastewater purifying stations, in a chamber receiving the products to be dried, and which is provided with means for turning over and routing said products, this installation comprising a greenhouse with translucent or transparent walls (1), erected on a slab or floor (2) upon which the bed (3) of products to be dried is deposited, this slab being equipped with said turning over and routing means, this installation being **characterized in that** it comprises one or more wind generators (4) generating energy which is degraded in the form of heat which is restored in the slab (2) upon which the bed of products to be dried (3) is spread.

2. The installation as claimed in claim 1, **characterized in that** said wind generators (4) constitute aerogenerators generating electrical energy supplying resistors embedded in the slab (2).

3. The installation as claimed in claim 1, **characterized in that** said wind generators actuate a heat pump (7) comprising a compressor and two heat exchangers: one constituting the hot source which transfers heat to the slab (2) and the second constituting the cold source, condensing the moisture in the air entering the greenhouse (1).

4. The installation as claimed in any one of the preceding claims, **characterized in that** it comprises ventilation means combining natural ventilation with intermittent forced ventilation.

5. The installation as claimed in any one of the preceding claims, **characterized in that** it comprises regulating means comprising sensors measuring the temperature of the bed (3) of products to be dried, the air temperature respectively inside and outside the greenhouse (1) and the humidity of the air, these sensors actuating mobile louvers (5,6) provided, respectively, in the top portion and in the bottom portion, on the walls of the greenhouse (1) in order to regulate the natural convection removing the moisture-laden air.

6. The installation as claimed in claim 5, **characterized in that** it further comprises programming and automation means.

7. The installation as claimed in any one of the preceding claims, **characterized in that** the means provided in the slab (2) for turning over and routing the bed (3) of products to be dried are provided in the form of rotating rollers, equipped with toothed harrows serving to break up the bed (3) while transporting the bed from the inlet to the outlet of the greenhouse.

8. The installation as claimed in claim 4, **characterized in that** the forced ventilation means are supplied with energy from said wind generators (4).

9. The installation as claimed in claim 7, **characterized in that** the means provided in the slab (2) for turning over and routing the bed (3) of products to be dried are supplied with energy from said wind generators (4).

## Patentansprüche

1. Anlage zum Trocknen von pastösen oder pulvrigen Produkten wie insbesondere von Abfällen, und spezieller von aus Anlagen zum Reinigen von Wässern stammenden Schlämmen, in einem Behälter, der die zu trocknenden Produkte aufnimmt und der mit Mitteln zum Sicherstellen des Wendens und des Förderns der besagten Produkte ausgestattet ist, wobei diese Anlage ein Treibhaus mit lichtdurchlässigen oder transparenten Wänden (1) umfasst, das auf einer Platte oder einem Boden (2) aufgebaut ist, auf der/dem die Schicht (3) von zu trocknenden Produkten abgelagert ist, wobei diese Platte mit den besagten Mitteln zum Wenden und Fördern ausgestattet ist, wobei diese Anlage **dadurch gekennzeichnet ist, dass** sie ein oder mehrere Windräder (4) umfasst, welche Energie erzeugen, die in Wärme umgewandelt wird, die in die Platte (2) eingespeist wird, auf der die Schicht von zu trocknenden Produkten abgelagert ist.

2. Anlage nach Anspruch 1, **dadurch gekennzeichnet, dass** die besagten Windräder (4) Windgeneratoren bilden, die elektrische Energie erzeugen, mit der in die Platte (2) eingebettete Heizwiderstände gespeist werden.

3. Anlage nach Anspruch 1, **dadurch gekennzeichnet, dass** die besagten Windräder (4) eine Wärmepumpe (7) mit einem Verdichter und zwei Wärmetauschern antreiben, deren einer die Wärmequelle bildet, welche die Wärmeenergie in die Platte (2) einträgt, und deren anderer die Kältequel!e bildet, welche die Feuchtigkeit der in das Treibhaus (1) einströmenden Luft kondensiert.

4. Anlage nach einem der vorstehenden Ansprüche, **dadurch gekennzeichnet, dass** sie Mittel zum Belüften umfasst, die eine natürliche Belüftung und eine intermittierende Zwangsbelüftung koppeln.

5. Anlage nach einem der vorstehenden Ansprüche, **dadurch gekennzeichnet, dass** sie Regelungsmittel aufweist, welche Sensoren zum Messen der Temperatur der Schicht (3) von zu trocknenden Produkten, der Temperatur der Luft jeweils innerhalb und außerhalb des Treibhauses (1) und des Feuchtegehalts der Luft umfassen, wobei diese Sensoren bewegliche Klappen (5, 6) ansteuern, die jeweils im oberen und im unteren Teil in den Wänden des Treibhauses (1) vorgesehen sind, um die natürliche Konvektion zu steuern, welche die Abfuhr feuchter Luft sicherstellt.

6. Anlage nach Anspruch 5, **dadurch gekennzeichnet, dass** sie außerdem Mittel zum Programmieren und Automatisieren aufweist.

7. Anlage nach einem der vorstehenden Ansprüche, **dadurch gekennzeichnet, dass** die auf der Platte (2) vorgesehenen Mittel zum Wenden und Fördern der Schicht (3) von zu trocknenden Produkten in Form von rotierenden Rollen ausgeführt sind, die mit gezackten, zum Aufreißen der Schicht (3) dienenden Eggen versehen sind, wobei sie zugleich den Transport der Schicht vom Zulauf zum Ausgang des Treibhauses sicherstellen.

8. Anlage nach Anspruch 4, **dadurch gekennzeichnet, dass** die Mittel zur Zwangsbelüften von den besagten Windrädern (4) mit Energie versorgt werden.

9. Anlage nach Anspruch 7, **dadurch gekennzeichnet, dass** die auf der Platte (2) vorgesehenen Mittel zum Wenden und Fördern der Schicht (3) von zu trocknenden Produkten von den besagten Windrädern (4) mit Energie versorgt werden.
